# EUROPEAN PATENT SPECIFICATION

(11) **EP 0 531 071 B1**
(45) Date of publication and mention of the grant of the patent: **24.07.1996**
(21) Application number: 92307881.0
(22) Date of filing: 28.08.1992
(51) Int. Cl.: A01D 34/74

(54) **Improvements in and relating to grass cutting machines**
Verbesserungen an Rasenmähern
Améliorations aux tondeuses à gazon

(30) Priority: 30.08.1991 GB 9118637
(43) Date of publication of application: 10.03.1993
(73) Proprietor: ELECTROLUX OUTDOOR PRODUCTS LIMITED, Newton Aycliffe, Co Durham DL5 6UP (GB)
(72) Inventor: Turnbull, Kenneth James, Corbridge, Northumberland NE45 5EX (GB); Davis, John Samuel, Darlington, Co. Durham DL1 5JA (GB); Coates, Niel Andrew, Sedgefield, Cleveland TS21 3AX (GB)
(74) Representative: Arthur, Bryan Edward

(56) References cited:
- EP-A- 0 204 573
- GB-A- 1 029 110
- GB-A- 2 082 036
- US-A- 3 093 948
- US-A- 3 114 229
- US-A- 3 247 654
- US-A- 3 248 863

## Description

This invention relates to grass cutting machines for both domestic and commercial applications and which may be powered using an electric motor or an internal combustion engine. Generally speaking grass-cutting machines fall into two main categories, namely, so-called machines employing a cylindrical cutter unit having a plurality of blades and mounted for rotation about its axis of symmetry which is disposed in a plane parallel to ground datum and so-called rotary machines employing a cutting member which is rotatable in a plane substantially parallel to ground datum and about an axis which is normal to ground datum. Each type of machine may be supported on wheels whereas the rotary-type of machine may be supported solely on a cushion of air and, such machines, are frequently known as rotary hover-machines.

A combined cylindrical and hover machine has also been proposed and such a machine is described and claimed in our European Patent Application No. 0204573. The cutting member of a rotary-type machine may take the form of, for example, a bar blade or a circular disc carrying a plurality of flail-type blades pivotally carried by the disc and projecting outwardly therefrom during use due to centrifugal force.

US 3,114,229 in the name of F T Wilson discloses a rotary mower of the kind supported above the ground by wheels. The mower includes a deck, a motor carried on the deck, a drive shaft mounted on the deck separate from the motor but linked thereto by a drive belt, and a cutting blade supported by the drive shaft beneath the deck for rotation about a vertical axis. the drive shaft includes a pulley, and is moveable up and down through the deck in order to adjust the height of cut of the cutting blade. The drive shaft is moveable up and down within a housing by a threaded bolt and a cylindrical plug. The threaded bolt includes a knurled head which is manually rotatable by an operator in order to screw the plug up and down the bolt. The drive shaft is carried by the plug via a bearing so as to move up and down with it.

US Patent No. 3,247,654 in the name of J Nemeth discloses a rotary mower blade height adjustment and clutch apparatus. A rotary lawn mower includes a frame, a rotatable shaft, a clutch assembly slidably mounted on the shaft which assembly comprises a conically shaped clutch member longitudinally slidable and non rotatably mounted on the shaft, a clutch body longitudinally slidable and rotatably received on the clutch member and having a conically shaped inner surface adapted to engage the conically shaped surface with the clutch member, a brake shoe mounted longitudinally slidably and non rotatably relation to the clutch body and in a rotatable but longitudinally fixed relationship with the clutch member, a spring urging the clutch body away from the brake shoe, a brake plate operably affixed to the frame and adapted to be positioned adjacent the brake shoe, and means adapted to engage the clutch body to slide the clutch assembly longitudinally on the shaft whereby when the clutch body is moved to its limit towards the brake plate the brake plate and the brake shoe come into contact thereby compressing the spring and moving the clutch body out of engagement with the clutch cone.

The present invention is particularly applicable to rotary-type grass cutting machines irrespective of how they are supported relative to ground datum. In order to vary the height of cut of mown grass using a rotary-type machine, it is common practice to use spacer washers which are placed over a driven shaft supporting the cutting member and located between an abutment and the cutting member to vary the axial position of the cutting member on the driven shaft. In order to effect change in the height of cut it is necessary to immobilise the machine, remove the cutting member, remove or add washers of appropriate thickness and,thereafter, replace the cutting member. Although this method of adjusting the height-of-cut is satisfactory and practical, it is time consuming. Furthermore, it is frequently necessary to clean the machine in order to reveal lock nuts or other means used for securing the cutting member to the driven shaft since the region of the mower where the adjustment is made is subject to agglomeration and compaction of cut grass and other debris.

It is an object of the present invention to permit height of cut adjustment of a rotary-type machine to be made during use without immobilisation of the machine.

According to the present invention a grass-cutting machine comprises a power source, a driven shaft, a cutting member mounted on the driven shaft for rotation, in use, in at least one cutting plane substantially parallel to ground datum, means for transmitting drive from the power source to the cutting member in each cutting plane, and adjusting means for adjusting the position of the plane of the cutting member relative to ground datum to vary the height of cut of mown grass,
the adjusting means including a displaceable member which is operable externally of the machine and is directly or indirectly co-operable with the cutting member for displacing the cutting member into at least one further cutting plane to vary the height of cut of mown grass, characterised in that the machine includes means for biasing the cutting member towards a predetermined cutting plane and in that the cutting member is displaceable by the adjusting means against the bias of the biasing means. Preferably, the displaceable member is a lever having a fulcrum disposed radially outwardly from the driven shaft whereby movement of the lever about the fulcrum displaces the cutting member into at least the said one further cutting plane to vary the height of cut of mown grass.

Conveniently, the biasing means biases the cutting member towards one cutting plane which may be either the cutting plane representing the greatest or the lowest height of cut.

Preferably, the lever includes a portion which serves directly or indirectly to apply a force to a part of the cutting member in the region of the driven shaft so as to effect displacement of the cutting member. To this end, the said portion of the lever may be bifurcated to straddle the driven shaft. Alternatively, the said portion of the lever may include an aperture which is a clearance fit around the driven shaft. Displacement of the cutting member is preferably effected against a biasing force which biases the cutting member into a plane representing the lowest height of cut of mown grass. Operation of the lever to effect adjustment of the cutting member may be manually controlled by a user using a bowden cable connection or a linkage system connected to a hand-lever. The hand-lever may be movable against a frictional brake so that the lever remains in any pre-selected position. Alternatively, the hand lever may be movable in discrete steps, each step representing a particular height of cut. The height of cut adjustment arrangement of the present invention may also be readily adapted for use with ride-on mowers.

In one form of machine according to the invention, the fulcrum is a portion of a cam surface of a cam which is angularly displaceable so as to vary the position of the fulcrum and thereby displace the lever and the cutting member to vary the height of cut of mown grass. The cam may have a cylindrical cam surface in which case the cam is mounted for angular displacement about an axis which is off-set from the axis of symmetry of the cylindrical cam surface.

In another form of the invention, the displaceable member includes a cam face which is directly or indirectly co-operable with the cutting member to effect displacement thereof from one cutting plane to another. The cam face of the displaceable member may bear directly upon a portion of the cutting member at a position which is disposed radially outwardly from the driven shaft.

In a further form of the invention, a machine includes an annular member co-operable with the cutting member and mounted co-axially relatively to the driven shaft and the cutting member, the annular member including a radially outwardly facing conically shaped face cam surface. In this further form of the invention, the displaceable member includes a portion which bears against the conical surface and means are included for displacing the displaceable member in a direction towards or away from the driven shaft against means for restraining displacement in at least one direction whereby displacement of the displaceable member causes the bearing portion thereof to co-operate with the conical face cam surface to displace the cutting member axially of the driven shaft to vary the height of cut.

A grass-cutting machine including different forms of adjustment means in accordance with the invention will now be described by way of example with reference to the accompanying drawings, in which:-
Figures 1 and 1A show in-section an electrically powered direct drive hover-type mower with its cutting member disposed in planes representing the lowest and greatest height of cut of mown grass respectively using a first form of height of cut adjustment means;
Figures 2 and 2A are views similar to Figures 1 and 1A of a machine including a second form of adjustment means;
Figures 3 and 3A are views similar to Figures 1 and 1A of a machine including a third form of adjustment means;
Figure 3B is an under plan of Figures 3 and 3A;
Figures 4 and 4A are views similar to Figures 1 and 1A of a machine including a fourth form of adjustment means, and
Figure 5 is a view similar to Figures 1 and 1A of an electrically powered indirect hover-type mower using a fifth form of adjustment means.

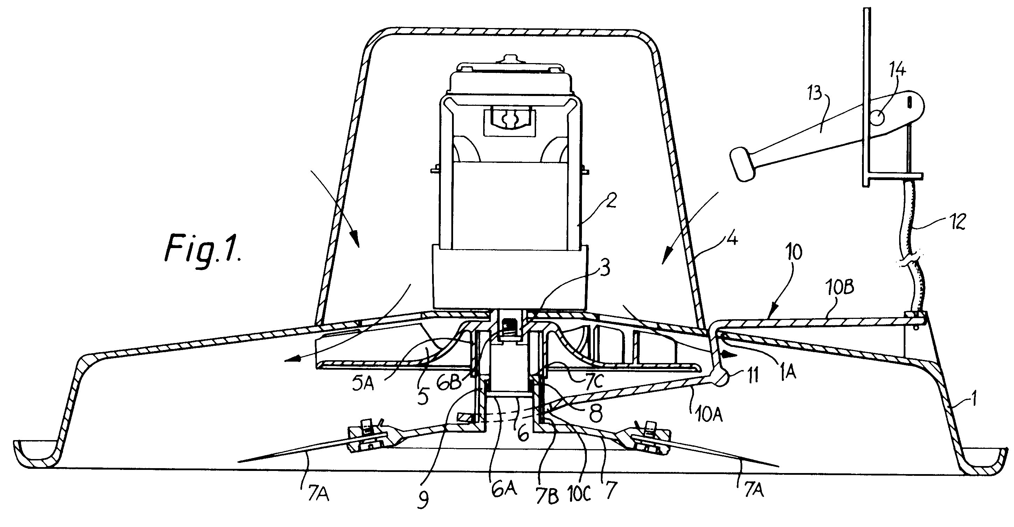

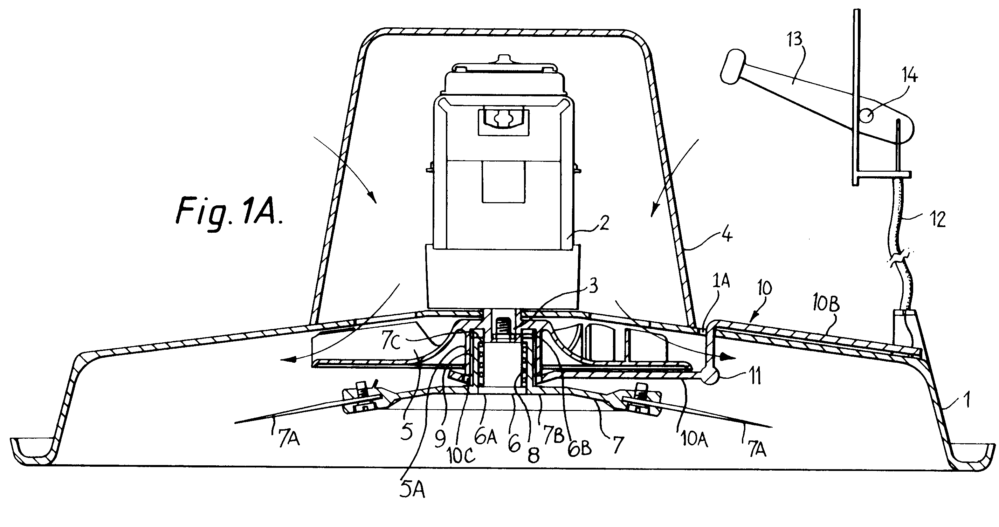

Referring to Figures 1, 1A, 2, 2A, 3, 3A, 4 and 4A, an inverted dish-shaped deck 1 supports an electric motor 2 having an output or driven shaft 3. A cover 4 serves to screen the motor 2 from atmosphere and includes one or more air inlets (not shown) for introducing air to cool the motor and to be fed to a bladed impeller 5. The bladed impeller 5 is co-axially and drivingly carried on the driven shaft 3 for producing a cushion of air below the deck 1 to support the machine during operation.

A central bush 6 having a flange 6A has a threaded spigot 6B screwed into a correspondingly threaded bore in the driven shaft as shown. A flail-type cutting member has a central circular disc 7 carrying two flail blades 7A and is coaxially mounted on a tubular shaft 7B which terminates remotely from the central disc in an inwardly projecting flange 7C. A compression spring 8 is located as shown between the two flanges 6A and 7C and serves to bias the cutting member into the position shown in Figure 1A.

The tubular shaft 7B is (a) axially slidable within a depending tubular extension 5A of the impeller 5 and (b) rotatable with the extension 5A by virtue of the spline 9. It will, therefore, be understood that the central bush 6 when threaded into the driven shaft 3 locks the impeller and the cutting member to the driven shaft 3.

A lever 10 is pivotally mounted on the deck 1 at fulcrum 11 and has two lever arms 10A and 10B. The lever arm 10A has an aperture 10C affording a clearance fit over the tubular shaft 7B whereas the lever arm 10B is cranked and passes through an opening 1A in the deck 1.

A bowden cable 12 connects the lever 10B to a handle 13 which is angularly movable about a pivot 14 fixed to, for example, the machine handle (not shown) so as to raise/lower the position of the cutting member between the two positions shown in Figures 1 and 1A respectively.

In operation, anti-clockwise angular movement of the lever 10 about the fulcrum 11 serves to downwardly displace the cutting member 7 against the compression spring 8 so as to reduce the height of cut of mown grass. Conversely, clockwise angular movement of the lever 10 about the fulcrum 11 allows the cutting member 7 assisted by the compression spring 8 to be raised so as to increase the height of cut of mown grass.

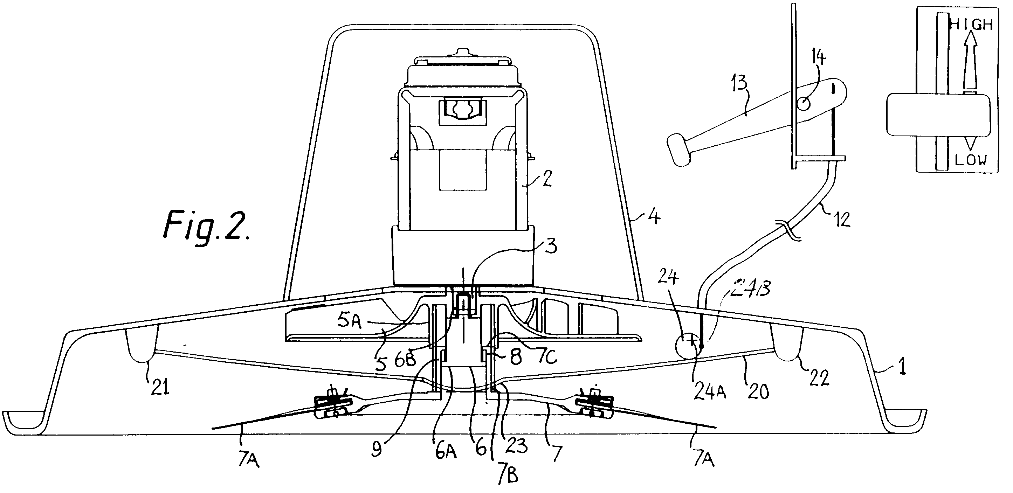

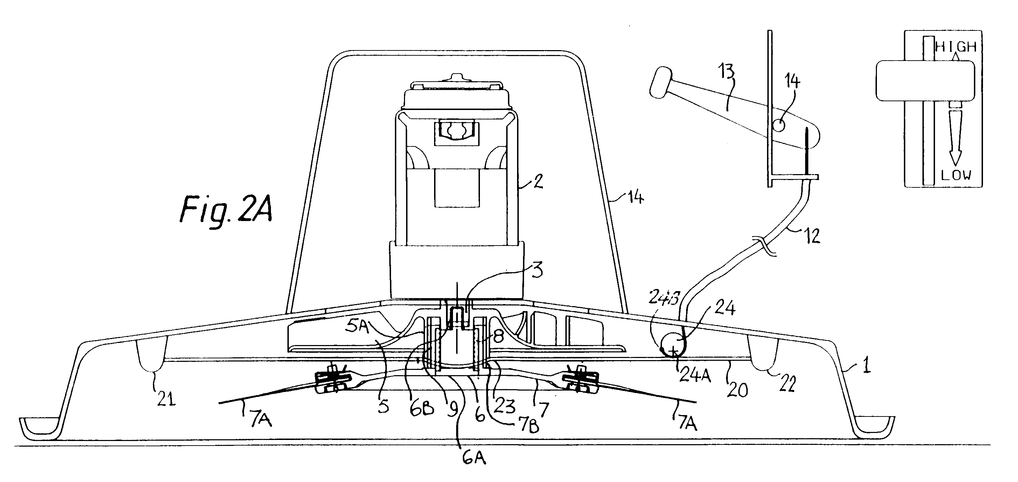

Referring to Figures 2 and 2A, a leaf spring 20 is simply supported between two supports 21, 22 depending from the deck 1. The leaf spring 20 has a central hole 23 which is a clearance fit around the tubular shaft 7B. From Figures 2 and 2A it will be seen that those parts of the leaf spring 20 surrounding the tubular shaft 7B are downwardly curved to bear against the central region of the circular disc 7.

In the machine shown in Figures 2 and 2A, the fulcrum 11 of the machine shown in Figures 1 and 1A is replaced by a cylindrical cam 24 supported (not shown) from the deck 1 for angular movement about an axis 24A which is off-set relative to the axis of symmetry of the cam 24. The bowden cable 12 is secured to a point 24B on the periphery of the cam 24.

In operation, angular displacement of the cam 24 about axis 24A under the agency of the bowden cable 12/lever 13 (which displacement is either assisted by or is against the restoring force naturally applied by the compression spring 8 serves to alter the vertical height of the position where the cam 24 co-acts with the leaf spring 20. Alteration of the vertical height changes the position of the cutting member 7 to vary the height of cut of mown grass.

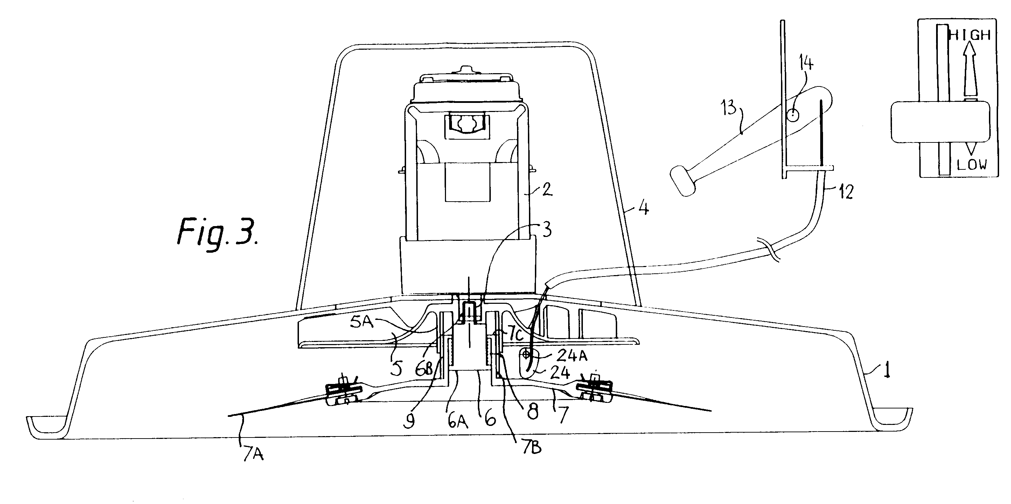

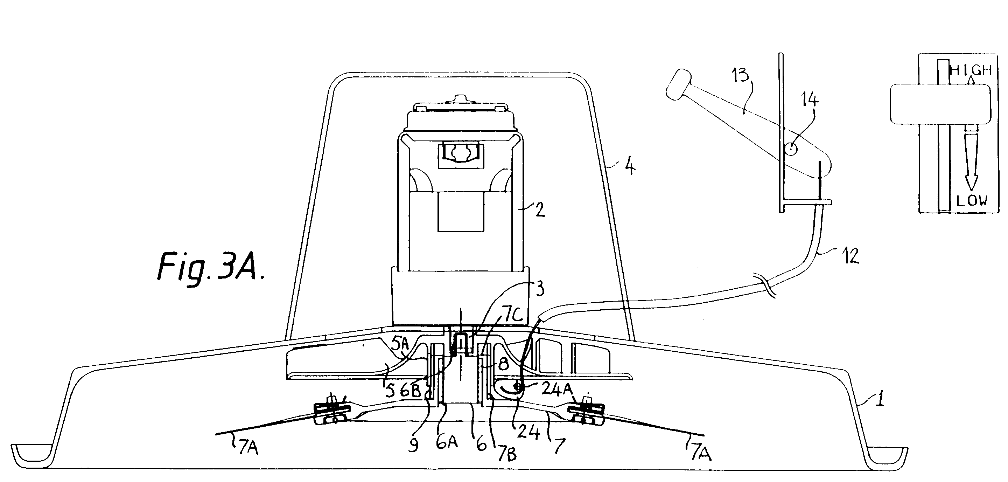

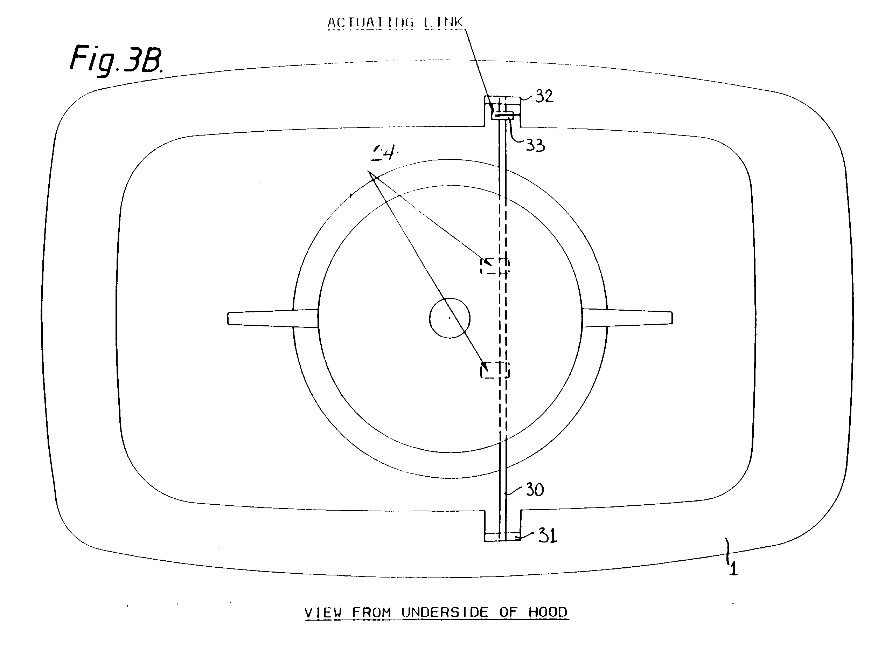

The machine shown in Figures 3, 3A and 3B also utilises a cam 24 as a principle element in the adjustment means but, in this instance, the leaf spring 20 is omitted. From Figure 3B it will be seen that two cams 24 are mounted on an actuating bar 30 which is supported in bearings at positions 31, 32 in the deck 1 and that the cams bear upon the cutting member 7. The bowden cable 12 is connected to a pulley or other linkage 33 secured to the link 30.

The peripheral shape of the cams 24 resemble so-called "snail-cams" and it will be appreciated that angular displacement of the cams about axes 24A of the bar 30 causes a change in the height of the cutting member 7 and, consequently, the height of cut of mown grass. In common with the machine described with reference to Figures 1/1A and 2/2A, the compression spring 8 serves to assist or resist vertical movement of the cutting member 7.

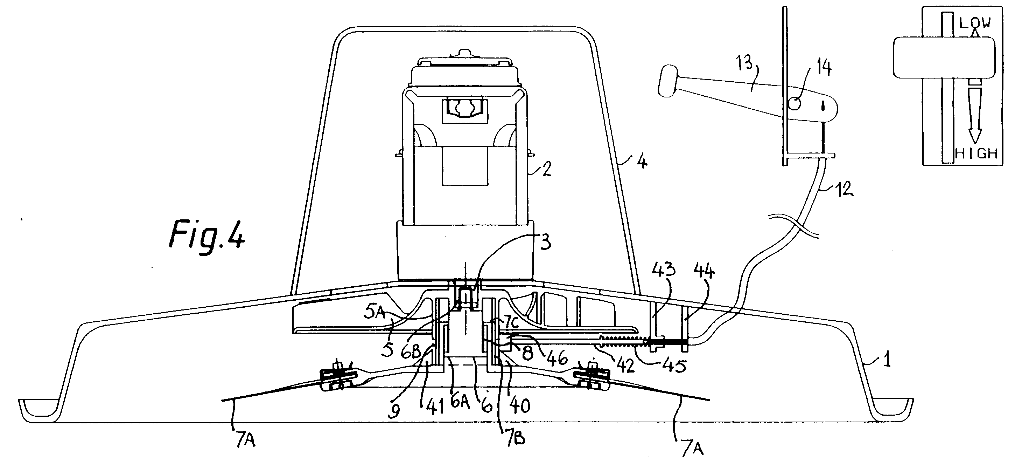

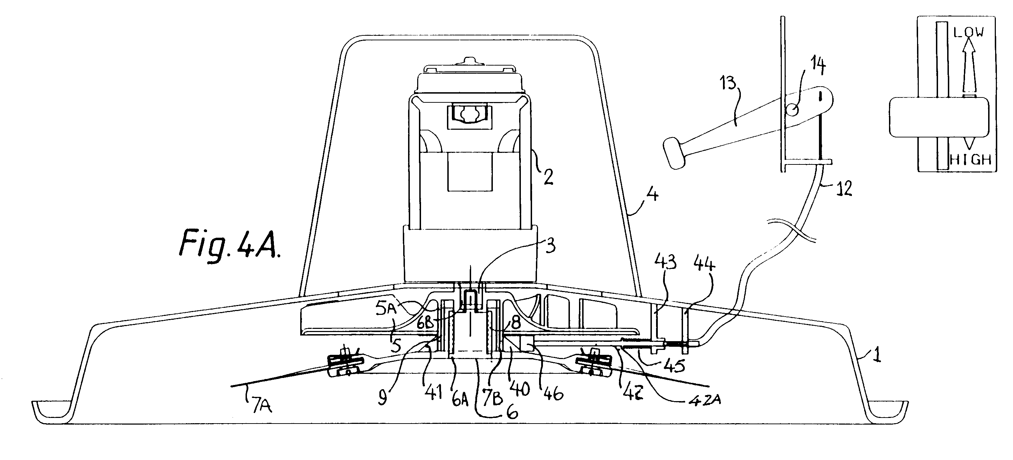

Referring to the machine shown in Figures 4/4A, an annular member 40 having a radially outwardly facing conically shaped face cam surface 41 is coaxially supported on the cutting member 7. A plunger 42 is supported from the deck 1 by brackets 43 and 44 for displacement in a direction towards and away from the driven shaft 3. A compression spring 45 disposed between the bracket 43 and a stop 42A on the plunger 42 urges the plunger 42 towards the driven shaft so that a head 46 is always biased into contact with the conically shaped cam surface 41. Thus, displacement of the plunger 42 towards the driven shaft 3 causes the head 46 to co-operate with the cam surface 41 and urge the cutting member 7 from the position shown in Figure 4A to the position shown in Figure 4 to reduce the height of cut of mown grass. In order to increase the height of cut to the position shown in Figure 4A, the plunger 42 is urged against the restoring force of the compression spring 45 by displacing the lever 13 into the position also shown in Figure 4A.

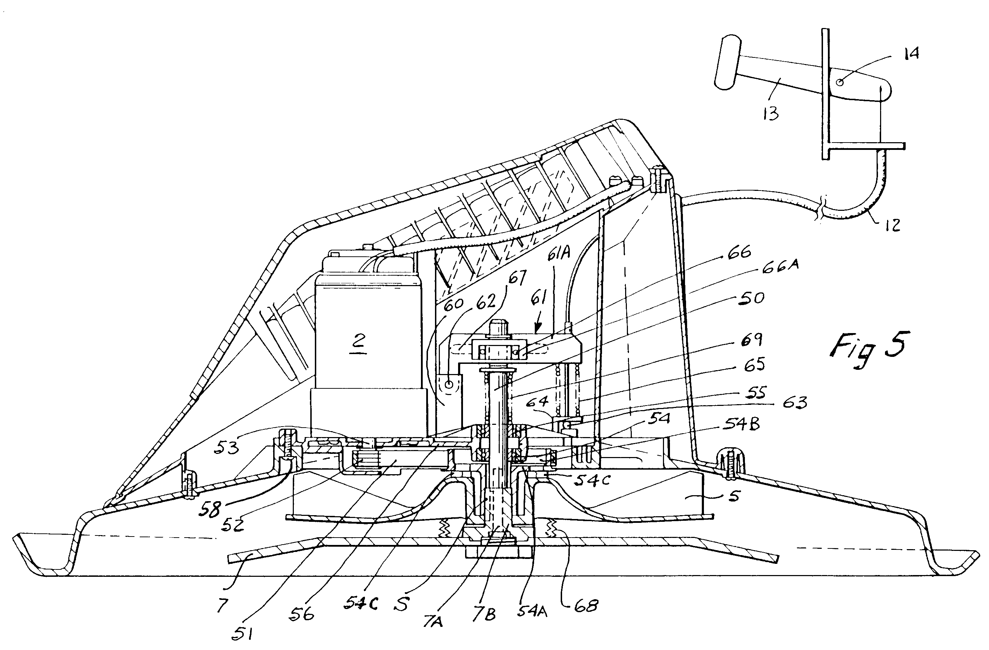

Referring to Figure 5, drive from an electric motor 2 is transmitted to an output or driven shaft 50 via drive belt 51 passing around a driving pulley 52 mounted on output shaft 53 of the motor 2 and a driven pulley 54B which is drivingly connected to the driven shaft 50 by a key/keyway system. The driven shaft is axially and slidably supported in two bearings 54/55 which are mounted in a plate 56 which is secured to the deck 1 by a number of screws of which screw 58 is representative. As shown in Figure 5, the electric motor 2 is also mounted on the plate 56.

The bladed impeller 5 and the cutting member 7 in the form of a single cutting blade are mounted co-axially with respect to the driven shaft 50 as described below. The driven pulley 54 includes a wall 54A extending radially with respect to the driven shaft 50 and the impeller 5 is secured to the wall 54A by screws 54C, thereby maintaining an air gap between the impeller and the underside of the deck 1. The driven pulley 54 has a tubular extension 54B which is concentric with the driven shaft 50. The cutting blade 7 is secured to the driven shaft 50 by a screw 7A which passes through a central boss 7B. The external surface of the central boss 7B and the tubular extension 54B of the driven pulley are drivingly connected by a slidable spline connection S.

The adjusting means for adjusting the position of the cutting blade 7 relative to ground datum to vary the height of cut of mown grass is supported from the plate 56 and is carried on a pillar 60. A cranked lever 61 in the form of a yoke is pivotally connected to the pillar at 62. The bowden cable 12 handle 13 arrangement previously described serves to control pivotal movement of the arm 61. The bowden cable 12 passes through a hole (not shown) in the lever 61 and is anchored at 63 to an angle plate 64 secured to the plate 56. A compression spring 65 biases the lever 61 in an anti-clockwise direction about the pivot 62.

The driven shaft 50 extends upwardly between parallel arms 61A of the yoke lever 61 and is supported therebetween in a bearing 66 which, in turn, is carried in a housing 66A. The bearing housing 66 is freely supported in two oppositely disposed slots 67 formed in each arm 61A. Thus during angular movement of the cranked lever 61 about the pivot 62, the bearing housing 66 is permitted to move sideways and is thereby maintained in substantial alignment with the driven shaft 50 during vertical movement of the driven shaft 50. A further spring 69 serves to bias the cutting blade 7 into a position corresponding to the maximum height of cut. In order to prevent cut grass and other debris entering the moving parts of the means for adjusting the height of cut a flexible bellows or other seal 68 is located between the impeller 5 and the cutting member 7.

To vary the height of cut of mown grass it will be appreciated that clockwise pivotal movement of the cranked - yoke lever 61 depresses the driven shaft and, consequently, the cutting blade 7 via the spline connection S and against the biasing face of the spring 69. As indicated previously, the handle 13 may be movable about the pivot 14 in discrete steps or may be constantly variable with means to retain the handle 13 in any desired position.

## Claims

1. A grass-cutting machine comprising a power source (2), a driven shaft (3), a cutting member (7, 7A) mounted on the driven shaft (3) for rotation, in use, in at least one cutting plane substantially parallel to ground datum, means (5A, 6, 6A, 6B, 7C) for transmitting drive from the power source (2) to the cutting member (7, 7A) in each cutting plane, and adjusting means (10, 11, 12, 13, 14) for adjusting the position of the plane of the cutting member (7, 7A) relative to ground datum to vary the height of cut of mown grass,
the adjusting means (11, 12, 13, 14) including a displaceable member (10) which is operable externally of the machine and directly or indirectly co-operable with the cutting member (7, 7A) for displacing the cutting member (7, 7A) into at least one further cutting plane to vary the height of cut of mown grass,
characterised in that the machine includes means (8) for biasing the cutting member (7, 7A) towards a predetermined cutting plane and in that the cutting member is displaceable by the adjusting means against the bias of the biasing means.

2. A machine according to claim 1 wherein the displaceable member is a lever (10) having a fulcrum (11) disposed radially outwardly from the driven shaft (3) whereby movement of the lever (10) about the fulcrum (11) displaces the cutting member (3) into at least the said one further cutting plane to vary the height of cut of mown grass.

3. A machine according to claim 2 wherein the lever (10) includes a portion (10C) which serves to apply a force to a part of the cutting member in the region of the driven shaft (3) so as to effect displacement of the cutting member (7,7A).

4. A machine according to claim 3 wherein the said portion (10C) of the lever (10) is bifurcated to straddle the driven shaft (3).

5. A machine according to claim 3 wherein the said portion (10C) of the lever (10) includes an aperture which is a clearance fit for the driven shaft (3).

6. A machine according to any preceding claim in which the biasing means (8) biases the cutting member (7,7A) into a cutting plane representing the lowest height of cut of mown grass.

7. A machine according to any one of claims 1 to 5 in which the biasing means (8) biases the cutting member (7,7A) into a cutting plane representing the greatest height of cut of mown grass.

8. A machine according to any preceding claim wherein a part of the lever (10) remote from the driven shaft (3) is movable in discrete steps to vary the cutting plane of the cutting member (7,7A).

9. A machine according to any of claims 1 or 7 wherein the position of the lever (10) is infinitely variable to vary the cutting plane of the cutting member (7,7A).

10. A machine according to any preceding claim including a connector (12) attached to the lever (10) at a position displaced from the fulcrum (11), whereby displacement of the connector (12) produces said movement of the lever (10) to displace the cutting member (7,7A).

11. A machine according to claim 10 wherein the connector is a bowden cable (12) connectable to a handle (13) for control by an operator.

12. A machine according to claim 10 wherein the connector (12) includes at least one further lever (13) connectable to a handle for control by an operator.

13. A machine according to claim 2 wherein the fulcrum (11) is a portion of a cam surface of a cam (24) which is angularly displaceable so as to vary the position of the fulcrum (11) and thereby displace the lever (10) and the cutting member (7,7A) to vary the height of cut of mown grass.

14. A machine according to claim 13 wherein the cam (24) has a cylindrical surface and is mounted for angular displacement about an axis (24A) which is off-set from the axis of symmetry of the cylindrical cam 24.

15. A machine according to claim 1 wherein the displaceable member is a cam (24) having a cam face which is directly or indirectly co-operable with the cutting member (7,7a) for displacing the cutting member (7,7A) from one cutting plane to another cutting plane.

16. A machine according to claim 15 wherein the cam face bears directly upon a portion of the cutting member (7,7A) at a position which is disposed radially outwardly from the driven shaft (3).

17. A machine according to claim 1 including an annular member (40) co-operable with the cutting member (7,7A) and mounted co-axially relatively to the driven shaft (3) and the cutting member (7,7A), the annular member (40) including a radially outwardly facing conically shaped cam surface (41), the displaceable member (42) including a bearing portion (46) which bears against the conical surface (41) and means for displacing the displaceable member (42) in a direction towards or away from the driven shaft (3) against means (45) for restraining displacement in at least one direction whereby displacement of the displaceable member (42) causes the bearing portion (46) thereof to co-operate with the conical cam surface (41) to displace the cutting member (7,7A) axially of the driven shaft (3) to vary the height of cut of mown grass.

18. A grass cutting machine according to claim 1 wherein the means (10,11,12,13,14) for transmitting drive from the power source (2) to the driven shaft (3) is an indirect drive line.

19. A grass cutting machine according to claim 18 wherein the indirect drive line is a belt/pulley system.

20. A grass cutting machine according to claim 18 wherein the indirect drive line is a gear train.

21. A grass cutting machine according to any one of claims 18 to 20 wherein the displaceable member is a lever (10) pivotally movable at a point radially outwardly of the driven shaft (3) and means for transmitting displacement of the member to the driven shaft.

22. A grass cutting machine according to claim 21 wherein the means for transmitting displacement of the member to the driven shaft (3) comprises a bearing floatingly supported in the lever and in which the driven shaft (3) is freely movable in an axial direction.

23. A machine according to claim 22 including a further bearing assembly for supporting the driven shaft at a position axially displaced relative to the floating bearing.

24. A machine according to claim 23 including a slidable spline drive between an impeller hub (5A), the impeller (5) including plurality of blades for establishing a flow of pressure air to support the machine above ground datum.

25. A machine according to any one of claims 1 to 17 including an impeller (5) for establishing a flow of pressure air for supporting the machine above ground datum.

26. A machine according to any one of claims 1 to 17 including wheels for supporting the machine.

27. A machine according to any one of claims 18 to 23 including wheels for supporting the machine above ground datum.

28. A machine according to any preceding claim characterised in that the adjusting means (10,11,12,13,14) includes an axial shaft extending from the cutting member (7,7A) and co-axially engageable with the drive shaft (3), one of said shafts being longitudinally slidable with respect to the other shaft to permit axial displacement therebetween for adjusting the position of the cutting plane, and in that the cutter member (7,7A) is disposed beneath the drive shaft (3).

29. A machine according to any preceding claim wherein the biasing means includes a spring (8).

## Patentansprüche

1. Gras-Schneidmaschine, welche eine Energiequelle (2), eine angetriebene Welle (3), ein Schneidelement (7, 7A), welches an der angetriebenen Welle (3) zur Ausführung einer Drehbewegung im Gebrauchszustand in wenigstens einer Schneidebene im wesentlichen parallel zur Bodengrundebene vorgesehen ist, eine Einrichtung (5A, 6, 6A, 6B, 7C) zum Übertragen des Antriebs von der Energiequelle (2) auf das Schneidelement (7, 7A) in jeder Schneidebene, und eine Einstelleinrichtung (10, 11, 12, 13, 14) zum Einstellen der Lage der Ebene des Schneidelements (7, 7A) relativ zur Bodengrundebene aufweist, um die Schnitthöhe des gemähten Grases zu verändern,
wobei die Einstelleinrichtung (11, 12, 13, 14) ein verschiebbares Teil (10) aufweist, welches von der Außenseite der Maschine her betreibbar ist und direkt oder indirekt mit dem Schneidelement (7, 7A) zum Verschieben des Schneidelements (7, 7A) in wenigstens eine weitere Schneidebene zusammenarbeitet, um die Schnitthöhe des gemähten Grases zu verändern,
**dadurch gekennzeichnet**, daß die Maschine eine Einrichtung (8) zum Vorbelasten des Schneidelements (7, 7A) in Richtung auf eine vorbestimmte Schneidebene umfaßt, und daß das Schneidelement durch die Einstelleinrichtung entgegen der Vorbelastung der Vorbelastungseinrichtung verschiebbar ist.

2. Maschine nach Anspruch 1, bei der das verschiebbare Teil ein Hebel (10) ist, welcher einen Drehpunkt (1) hat, welcher radial außerhalb von der angetriebenen Welle (3) angeordnet ist, wobei bei der Bewegung des Hebels (10) um den Drehpunkt (11) das Schneidelement (3) in die wenigstens eine weitere Schneidebene verschoben wird, um die Schnitthöhe des gemähten Grases zu verändern.

3. Maschine nach Anspruch 2, bei der der Hebel (10) einen Abschnitt (10C) umfaßt, welcher dazu dient, eine Kraft auf einen Teil des Schneidelements im Bereich der angetriebenen Welle (3) derart aufzubringen, daß eine Verschiebung des Schneidelements (7, 7A) bewirkt wird.

4. Maschine nach Anspruch 3, bei der der Abschnitt (10C) des Hebels (10) gegabelt ist, so daß er über die angetriebene Welle (3) gespreizt ist.

5. Maschine nach Anspruch 3, bei der der Abschnitt (10C) des Hebels (10) eine Öffnung umfaßt, welche eine Spielpassung für die Aufnahme der angetriebenen Welle (3) bildet.

6. Maschine nach einem der vorangehenden Ansprüche, bei der die Vorbelastungseinrichtung (8) das Schneidelement (7, 7A) in eine Schneidebene vorbelastet, welche die niedrigste Schnitthöhe des gemähten Grases darstellt.

7. Maschine nach einem der vorangehenden Ansprüche 1 bis 5, bei der die Vorbelastungseinrichtung (8) das Schneidelement (7, 7A) in eine Schneidebene vorbelastet, welche die größte Schnitthöhe des gemähten Grases darstellt.

8. Maschine nach einem der vorangehenden Ansprüche, bei der ein Teil des Hebels (10), welcher von der angetriebenen Welle (3) entfernt liegt, in diskreten Schritten bewegbar ist, um die Schneidebene des Schneidelements (7, 7A) zu verändern.

9. Maschine nach einem der Ansprüche 1 oder 7, bei der die Position des Hebels (10) stufenlos veränderbar ist, um die Schneidebene des Schneidelements (7, 7A) zu verändern.

10. Maschine nach einem der vorangehenden Ansprüche, welche ein Verbindungsteil (12) umfaßt, welches an dem Hebel (10) an einer Position entfernt von dem Drehpunkt (11) angebracht ist, wobei bei einer Verschiebung des Verbindungsteils (12) die Bewegung des Hebels (10) zur Verschiebung des Schneidelements (7, 7A) bewirkt wird.

11. Maschine nach Anspruch 10, bei der das Verbindungsteil ein Bowdenzug (12) ist, welcher mit einem Griffteil (13) zur Steuerung durch eine Bedienungsperson verbindbar ist.

12. Maschine nach Anspruch 10, bei der das Verbindungsteil (12) wenigstens einen weiteren Hebel (13) umfaßt, welcher mit einem Griffteil zur Steuerung durch eine Bedienungsperson verbindbar ist.

13. Maschine nach Anspruch 2, bei der der Drehpunkt (11) ein Teil einer Nockenfläche einer Nocke (24) ist, welche in Winkelrichtung derart verschiebbar ist, daß die Position des Drehpunktes (11) veränderbar ist und hierdurch der Hebel (10) und das Schneidteil (7, 7A) verschoben werden, um die Schnitthöhe des gemähten Grases zu verändern.

14. Maschine nach Anspruch 13, bei der die Nocke (24) eine zylindrische Fläche hat und zur Winkelverschiebung um eine Achse (24A) angebracht ist, welche zu der Symmetrieachse der zylindrischen Nocke (24) versetzt ist.

15. Maschine nach Anspruch 1, bei der das verschiebbare Teil eine Nocke (24) ist, welche eine Nockenfläche hat, welche direkt oder indirekt mit dem Schneidteil (7, 7A) zum Verschieben des Schneidteils (7, 7A) von einer Schneidebene in die andere Schneidebene zusammenarbeitet.

16. Maschine nach Anspruch 15, bei der die Nockenfläche direkt auf einem Teil des Schneidelements (7, 7A) an einer Stelle aufliegt, welche radial außerhalb von der angetriebenen Welle (3) liegt.

17. Maschine nach Anspruch 1, welche ein ringförmiges Teil (40) umfaßt, welches mit dem Schneidelement (7, 7A) zusammenarbeitet, und koaxial relativ zur angetriebenen Welle (3) und dem Schneidelement (7, 7A) angebracht ist, wobei das ringförmige Teil (40) eine radial nach außen weisende, konisch ausgebildete Nockenfläche (41) aufweist, das verschiebbare Teil (42) ein Lagerabschnitt (46) umfaßt, welcher gegen die konische Fläche (41) anliegt, und welche eine Einrichtung umfaßt, welche das verschiebbare Teil (42) in eine Richtung auf die angetriebene Welle (3) zu und von dieser weg entgegen der Einrichtung (45) zur Begrenzung der Verschiebebewegung in wenigstens einer Richtung verschiebt, wodurch durch die Verschiebung des verschiebbaren Teils (42) bewirkt wird, daß der Lagerabschnitt (46) mit der konischen Nockenfläche (41) zusammenarbeitet, um das Schneidelement (7, 7A) axial zu der angetriebenen Welle (3) zu verschieben, und die Schnitthöhe des gemähten Grases zu verändern.

18. Grasschneidmaschine nach Anspruch 1, bei der die Einrichtung (10, 11, 12, 13, 14) zum Übertragen des Antriebs von der Energiequelle (2) auf die Getriebewelle (3) ein indirekter Antrieb ist.

19. Grasschneidmaschine nach Anspruch 18, bei der der indirekte Antrieb ein Riemen/Riemenscheiben-System ist.

20. Grasschneidmaschine nach Anspruch 18, bei der der indirekte Antrieb eine Getriebeeinrichtung umfaßt.

21. Grasschneidmaschine nach einem der Ansprüche 18 bis 20, bei der das verschiebbare Teil ein Hebel (10) ist, welcher an einer Stelle radial außerhalb von der angetriebenen Welle (3) schwenkbeweglich ist, und bei der die Einrichtung zum Übertragen der Verschiebebewegung des Teils zu der angetriebenen Welle hiervon gebildet wird.

22. Grasschneidmaschine nach Anspruch 21, bei der die Einrichtung zum Übertragen der Verschiebebewegung des Teils auf die angetriebene Welle (3) ein Lager aufweist, welches in dem Hebel schwimmend gelagert ist, und in welchem die getriebene Welle (3) in einer axialen Richtung frei beweglich ist.

23. Maschine nach Anspruch 22, welche ferner eine Lageranordnung zum Lagern der angetriebenen Welle in einer Position umfaßt, die axial relativ zu der schwimmenden Lagerung verschoben ist.

24. Maschine nach Anspruch 21, welche einen gleitbeweglichen Keilantrieb zwischen einer Flügelrad-Nabe (5A) umfaßt, wobei das Flügelrad (5) eine Mehrzahl von Flügeln aufweist, welche einen Druckluftstrom erzeugen, um die Maschine über der Bodengrundebene zu halten.

25. Maschine nach einem der Ansprüche 1 bis 17, welche ein Flügelrad (5) zum Erzeugen eines Druckluftstromes umfaßt, welche die Maschine über der Bodengrundebene hält.

26. Maschine nach einem der Ansprüche 1 bis 17, welche Räder als Auflage der Maschine umfaßt.

27. Maschine nach einem der Ansprüche 18 bis 23, welche Räder zur Auflage der Maschine über der Bodengrundebene umfaßt.

28. Maschine nach einem der vorangehenden Ansprüche, **dadurch gekennzeichnet**, daß die Einstelleinrichtung (10, 11, 12, 13, 14) eine axiale Welle umfaßt, welche sich von dem Schneidelement (7, 7A) weg erstreckt und koaxial in Eingriff mit der treibenden Welle (3) bringbar ist, wobei eine der Wellen in Längsrichtung bezüglich der anderen Welle gleitbeweglich ist, um eine axiale Verschiebung zur Einstellung der Position der Schneidebene zu ermöglichen, und daß das Schneidelement (7, 7A) unterhalb der treibenden Welle (3) angeordnet ist.

29. Maschine nach einem der vorangehenden Ansprüche, bei der die Vorbelastungseinrichtung eine Feder (8) umfaßt.

## Revendications

1. Tondeuse à gazon comprenant une source d'alimentation (2), un arbre mené (3), un organe de coupe (7, 7A) monté sur l'arbre mené (3) pour tourner, en utilisation, dans au moins un plan de coupe sensiblement parallèle au plan de référence constitué par le sol, des moyens (5A, 6, 6A, 6B, 7C) pour transmettre le mouvement d'entraînement provenant de la source d'alimentation (2) à l'organe de coupe (7, 7A) dans chaque plan de coupe, et des moyens de réglage (10, 11, 12, 13, 14) pour régler la position du plan de l'organe de coupe (7, 7A) par rapport au plan de référence constitué par le sol pour faire varier la hauteur de coupe d'herbe tondue,
les moyens de réglage (11, 12, 13, 14) comprenant un élément déplaçable (10) qui est manoeuvrable depuis l'extérieur de la machine et directement ou indirectement actionnable en association avec l'organe de coupe (7, 7A) pour déplacer l'organe de coupe (7, 7A) dans au moins un autre plan de coupe pour faire varier la hauteur de coupe d'herbe tondue,
caractérisée en ce que la machine comporte des moyens (8) pour faire dévier l'organe de coupe 7, 7A) vers un plan de coupe prédéterminé et en ce que l'organe de coupe est déplaçable par les moyens de réglage en contrant l'action de déviation des moyens de déviation.

2. Machine selon la revendication 1, dans laquelle l'élément déplaçable est un levier (10) comportant un pivot (11) disposé radialement vers l'extérieur de l'arbre mené (3), de telle sorte que le mouvement du levier (10) autour du pivot (11) déplace l'organe de coupe (3) dans au moins ledit autre plan de coupe pour faire varier la hauteur de coupe d'herbe tondue.

3. Machine selon la revendication 2, dans laquelle le levier (10) comporte une section (10C) qui sert à appliquer une force à une partie de l'organe de coupe dans la région de l'arbre mené (3) de manière à réaliser le déplacement de l'organe de coupe (7, 7A).

4. Machine selon la revendication 3, dans laquelle ladite section (10C) du levier (10) est bifurquée pour chevaucher l'arbre mené (3).

5. Machine selon la revendication 3, dans laquelle ladite section (10C) du levier (10) comporte une ouverture qui constitue un assemblage avec jeu pour l'arbre mené (3).

6. Machine selon l'une quelconque des revendications qui précèdent, dans laquelle les moyens de déviation (8) dévient l'organe de coupe (7, 7A) dans un plan de coupe correspondant à la hauteur de coupe d'herbe tondue la plus basse.

7. Machine selon l'une quelconque des revendications 1 à 5, dans laquelle les moyens de déviation (8) dévient l'organe de coupe (7, 7A) dans un plan de coupe correspondant à la hauteur de coupe d'herbe tondue la plus haute.

8. Machine selon l'une quelconque des revendications qui précèdent, dans laquelle une partie du levier (10) éloignée de l'arbre mené (3) est déplaçable par paliers discontinus pour faire varier le plan de coupe de l'organe de coupe (7, 7A).

9. Machine selon l'une quelconque des revendications 1 ou 7, dans laquelle la position du levier (10) est variable à l'infini pour faire varier le plan de coupe de l'organe de coupe (7, 7A).

10. Machine selon l'une quelconque des revendications qui précèdent, comportant un connecteur (12) fixé sur le levier (10) dans une position déplacée du pivot (11), de telle sorte que le déplacement du connecteur (12) produise ledit mouvement du levier (10) pour déplacer l'organe de coupe (7, 7A).

11. Machine selon la revendication 10, dans laquelle le connecteur est un câble Bowden (12) raccordable à une poignée (13) pour manoeuvre par un opérateur.

12. Machine selon la revendication (10), dans laquelle le connecteur (12) comporte au moins un autre levier (13) raccordable à une poignée pour manoeuvre par un opérateur.

13. Machine selon la revendication 2, dans laquelle le pivot (11) est une partie d'une surface de came d'une came (24) qui est angulairement déplaçable de manière à faire varier la position du pivot (11) et ainsi à déplacer le levier (10) et l'organe de coupe (7, 7A) pour faire varier la hauteur de coupe d'herbe tondue.

14. Machine selon la revendication 13, dans laquelle la came (24) a une surface cylindrique et est montée pour se déplacer angulairement autour d'un axe (24A) qui est décalé par rapport à l'axe de symétrie de la came cylindrique (24).

15. Machine selon la revendication 1, dans laquelle l'élément déplaçable est une came (24) ayant une face de came qui est directement ou indirectement manoeuvrable en association avec l'organe de coupe (7,7A) pour déplacer l'organe de coupe (7, 7A) d'un plan de coupe vers un autre plan de coupe.

16. Machine selon la revendication 15, dans laquelle la face de came porte directement sur une partie de l'organe de coupe (7, 7A) dans une position qui est disposée radialement vers l'extérieur de l'arbre mené (3).

17. Machine selon la revendication 1, comportant un élément annulaire (40) actionnable en association avec l'organe de coupe (7, 7A) et monté coaxialement par rapport à l'arbre mené (3) et à l'organe de coupe (7, 7A), l'élément annulaire (40) comportant une surface de came (41) de forme conique orientée radialement vers l'extérieur, l'élément déplaçable (42) comportant une partie formant palier (46) qui porte contre la surface conique (41) et de moyens pour déplacer l'élément déplaçable (42) dans une direction se rapprochant ou s'écartant de l'arbre mené (3) en contrant les moyens (45) pour restreindre le déplacement dans au moins une direction, de telle sorte que le déplacement de l'élément déplaçable (42) amène la partie formant palier (46) de celui-ci à collaborer avec la surface de came conique (41) pour déplacer l'organe de coupe (7, 7A) axialement par rapport à l'arbre mené (3) pour faire varier la hauteur de coupe d'herbe tondue.

18. Tondeuse à gazon selon la revendication 1, dans laquelle les moyens (10, 11, 12, 13, 14) pour transmettre l'entraînement obtenu par la source d'alimentation (2) à l'arbre mené (3) est une chaîne de transmission indirecte.

19. Tondeuse à gazon selon la revendication 18, dans laquelle la chaîne de transmission indirecte est un système de courroie / poulies.

20. Tondeuse à gazon selon la revendication 18, dans laquelle la chaîne de transmission indirecte est un train d'engrenages.

21. Tondeuse à gazon selon l'une quelconque des revendications 18 à 20, dans laquelle l'élément déplaçable est un levier (10) mobile par pivotement en un point radialement à l'extérieur de l'arbre mené (3) et des moyens pour transmettre le déplacement de l'élément à l'arbre mené.

22. Tondeuse à gazon selon la revendication 21, dans laquelle les moyens de transmission du déplacement de l'élément à l'arbre mené (3) comprennent un palier monté flottant dans le levier et dans laquelle l'arbre mené (3) est librement mobile dans une direction axiale.

23. Machine selon la revendication 22, comportant un autre ensemble formant palier pour supporter l'arbre mené dans une position axialement déplacée par rapport au palier flottant.

24. Machine selon la revendication 23, comportant un entraînement par cannelure coulissant entre un moyeu de roue (5A), la roue (5) comportant une pluralité d'aubes pour créer un flux d'air sous pression pour supporter la machine au-dessus du plan de référence constitué par le sol.

25. Machine selon l'une quelconque des revendications 1 à 17, comportant une roue (5) pour créer un flux d'air sous pression pour supporter la machine au-dessus du plan de référence constitué par le sol.

26. Machine selon l'une quelconque des revendications 1 à 17 comportant des roues pour supporter la machine.

27. Machine selon l'une quelconque des revendications 18 à 23 comportant des roues pour supporter la machine au-dessus du plan de référence constitué par le sol.

28. Machine selon l'une quelconque des revendications qui précèdent, caractérisée en ce que les moyens de réglage (10, 11, 12, 13, 14) comportent un arbre axial partant de l'organe de coupe (7, 7A) et pouvant venir en prise coaxialement avec l'arbre d'entraînement (3), l'un desdits arbres pouvant coulisser longitudinalement par rapport à l'autre arbre pour permettre un déplacement axial entre eux pour régler la position du plan de coupe, et en ce que l'organe de coupe (7, 7A) est disposé en dessous de l'arbre d'entraînement (3).

29. Machine selon l'une quelconque des revendications qui précèdent, dans laquelle les moyens de déviation comprennent un ressort (8).
